Europäisches Patentamt

European Patent Office

Office européen des brevets

(11) Numéro de publication: **0 369 978**
**A2**

## (12) DEMANDE DE BREVET EUROPEEN

(21) Numéro de dépôt: 89870177.6

(22) Date de dépôt: 08.11.89

(51) Int. Cl.⁵: **G11B 17/04, G11B 17/032**

(30) Priorité: **17.11.88 BE 8801303**

(43) Date de publication de la demande:
**23.05.90 Bulletin 90/21**

(84) Etats contractants désignés:
**CH DE FR GB IT LI NL**

(71) Demandeur: **STAAR SOCIETE ANONYME**
**Chaussée de Roodebeek, 137-143**
**B-1200 Bruxelles(BE)**

(72) Inventeur: **d'Alayer de Costemore d'Arc,**
**Stéphane Marie André**
**Rue Emile François 12A**
**B-1474 Ways(BE)**

(74) Mandataire: **Overath, Philippe et al**
**Cabinet Bede 13, Avenue Antoine Depage**
**B-1050 Bruxelles(BE)**

(54) **Dispositif de chargement d'éjection et de centrage pour disques de diamètres différents.**

(57) Le dispositif s'applique aux tourne-disques dans lesquels le disque est placé en substance vertical lorsqu'il est en position opérative et comporte des moyens de positionnement (72) d'un disque de petit diamètre (7) à un niveau proche de son niveau opératif lors du passage dudit disque de son plan de chargement vers son plan opératif et d'autre part des moyens (20,11) permettant le maintien de ce disque (7) contre ces moyens de positionnement (72) lors du passage du disque (7) de son plan opératif à son plan d'éjection.

FIG. 2

## DISPOSITIF DE CHARGEMENT, D'EJECTION ET DE CENTRAGE POUR DISQUES DE DIAMETRES DIFFE-RENTS

La présente invention concerne des dispositifs de chargement, d'éjection et de centrage de disques d'au moins deux diamètres différents assurant le passage du disque de son niveau et de son plan d'introduction à son niveau et son plan opératif et vice versa.

Elle s'applique plus particulièrement aux tourne-disques dans lesquels le disque est placé en substance verticale lorsqu'il est en position opérative et donc dans lesquels le passage du disque de sa position d'introduction à sa position opérative est en partie assurée par l'action de son propre poids.

La demande de brevet belge n° 8800058 de la demanderesse décrit un système de chargement typique à celui auquel se rapporte l'invention mais, dans le cas cité, il requiert que le système de chargement et de déchargement soit pourvu d'une fente d'introduction.

Or, du fait de la sensibilité des deux surfaces des disques numériques aux empreintes de doigts, aux griffes, etc...il est important de pouvoir manipuler ces disques, d'au moins deux diamètres différents, avec le plus grand soin et par conséquent, placer ou extraire ces disques en ne les tenant que par le centre et la périphérie.

D'autre part, les systèmes de chargement existants pour des disques de diamètres différents présentent une épaisseur telle que l'adaptation aux tourne-disques de la première génération, c'est-à-dire prévus pour un disque d'un seul diamètre, se révèle difficile, voire impossible.

Le but de la présente invention est donc de remédier aux inconvénients précités en proposant des moyens simples, fiables, faciles à mettre en oeuvre et applicables notamment à des appareils où le chargement et l'éjection des disques se fait à l'aide d'une porte.

Un second but de l'invention est de faire en sorte que le dispositif prévu pour des disques d'au moins deux diamètres différents n'augmente pas l'épaisseur de la porte de façon à en permettre l'adaptation à tout type de tourne-disques prévu pour un seul diamètre de disque présent sur le marché sans nécessiter une quelconque modification de structure et/ou d'encombrement.

Un troisième but de l'invention est de proposer un système de chargement s'adaptant à tout type de lecteur laser existant et ce quel que soit la position de son axe de translation lors de la lecture du disque.

Un quatrième but de l'invention est d'utiliser des moyens existants dans tout lecteur de disques numériques tels les moyens de clamage, pour la réalisation de l'invention afin d'éviter l'ajout de pièces supplémentaires inutiles, encombrantes et grèvant le prix de revient de l'ensemble.

Un cinquième but de l'invention est d'associer et de synchroniser ces moyens de clamage avec un dispositif visant à translater des disques d'au moins deux diamètres différents, de façon à en faciliter le chargement et l'éjection. En effet, le genre d'appareils auxquels l'invention s'applique, est destiné à un très large public et ne doit pas offrir la moindre difficulté de manipulation.

En vue de la réalisation de ces buts, le dispositif, objet de l'invention, comporte :

- une surface destinée à recevoir un disque du plus grand diamètre donné ;
- au moins un guide limitant le mouvement latéral du disque lorsqu'il passe de son niveau d'introduction à son niveau opératif et vice-versa ;
- des moyens assurant le clamage du disque sur son plateau d'entraînement, libres en rotation par rapport à ladite surface et dont le déplacement perpendiculaire à cette même surface est limité et est essentiellement caractérisé par le contenu de la revendication principale.

Divers avantages et caractéristiques de l'invention ressortiront d'un mode de réalisation préféré, donné ci-après à titre non limitatif et pour lequel :

- la figure 1 est une vue latérale du dispositif en position opérative ;

- la figure 2 est une vue en coupe latérale selon la ligne A-A (figure 3) et représente le dispositif dans une position intermédiaire dans laquelle les moyens de clamage sont encore en contact avec la surface d'un disque et notamment d'un disque de petit diamètre (8 cm) ;

- la figure 3 est une vue de face représentant le mécanisme d'introduction et d'éjection des disques en position opérative (fig. 1) ;

- la figure 4 est une vue semblable à la figure 1 et représente le dispositif dans la position de chargement ou d'éjection ;

- la figure 5 est une vue semblable à la figure 3 et représente le dispositif tel qu'il apparaît dans la position de chargement ou/et d'éjection (fig. 4) ;

- la figure 6 est une vue en coupe de la figure 5 suivant la ligne B-B et représente les différents niveaux du plan de surface de la porte ;

- la figure 7 est une vue de la face opposée du dispositif tel qu'apparaissant à la figure 5, faisant abstraction des disques pour simplifier la figure.

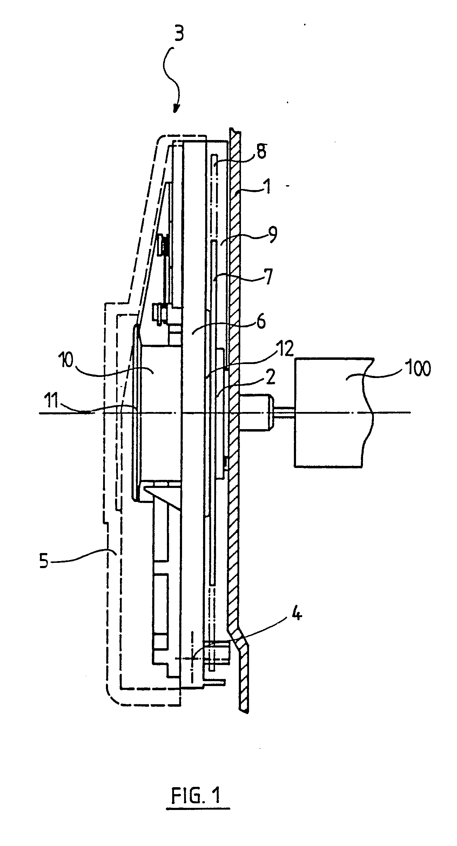

A la figure 1 on a représenté schématiquement un appareil comportant un châssis fixe 1 sur lequel sont montés les moyens d'entraînement et de lecture du disque de type connus et représentés schématiquement par un simple plateau 2 entraîné par un moteur 100. Une porte 3 comportant la plus grande partie du dispositif de chargement, d'éjection et de centrage du disque pivote par rapport audit châssis 1 autour de pivots 4 symbolisés par deux traits d'axe. Cette porte est dotée d'un capot de protection 5 représenté en trait pointillé, protégeant lesdits dispositifs de chargement et de centrage.

Le pivotement de la porte 3 par rapport au châssis 1 peut être avantageusement assisté par un système amortisseur pour obtenir un mouvement régulier et progressif.

La porte 3 est composée d'une surface 6 destinée à recevoir un disque du plus grand diamètre donné 8. Cette surface est taillée légèrement en biseau présentant ainsi un profil en V afin de faciliter le glissement du disque et d'éviter de griffer la surface dudit disque. Pour de plus amples explications sur les caractéristiques et les avantages d'un tel profil, on se reportera avantageusement au brevet belge n° 891.428 de la demanderesse.

Ladite surface 6 comporte des guides latéraux 9 destinés à guider et à limiter le mouvement d'un disque de grand diamètre 8 (diamètre : 12 cm).

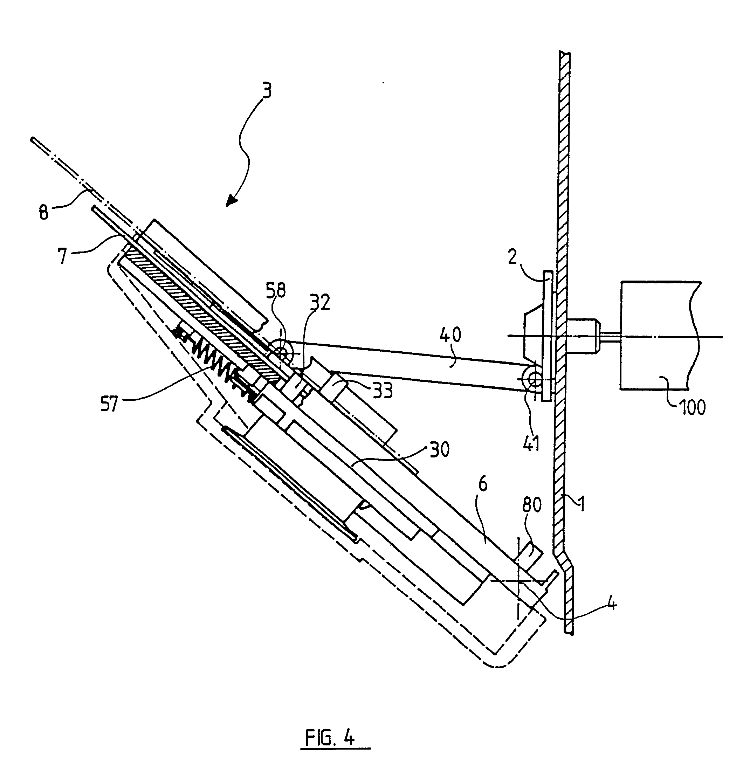

En position opérative, tout disque et donc le disque de petit diamètre 7 (diamètre : 8 cm) tel que représenté dans la fig. 1 est maintenu plaqué contre le plateau d'entraînement 2 par l'intermédiaire de moyens de clamage qui dans le cas présent sont solidairement composés d'un cylindre 10 contenant un aimant, d'une coupelle 11 et d'un plateau de clamage 12 coopérant avec la surface du disque et venant s'emboîter sur le cône (voir figure 4) du plateau d'entraînement 2. Le cylindre 10 tourne librement dans une ouverture circulaire 68 pratiquée dans la surface 6 de la porte et y est retenu par le fait même que la coupelle 11 et le plateau 12 soient d'un diamètre supérieur à celui de l'ouverture 68.

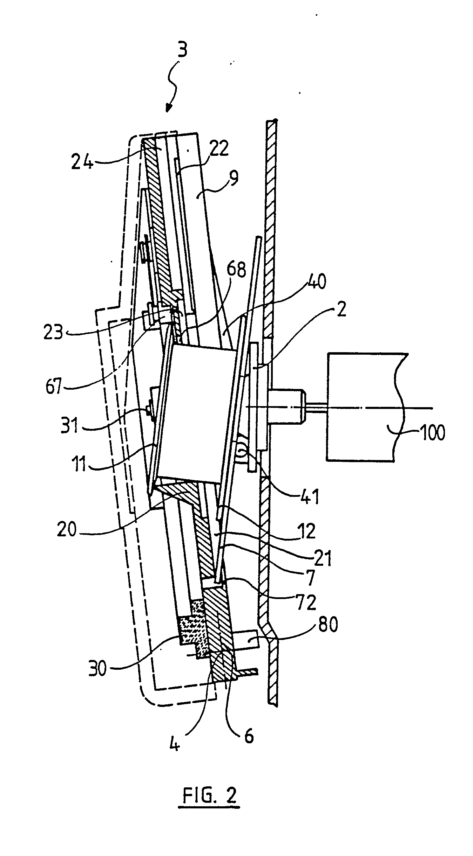

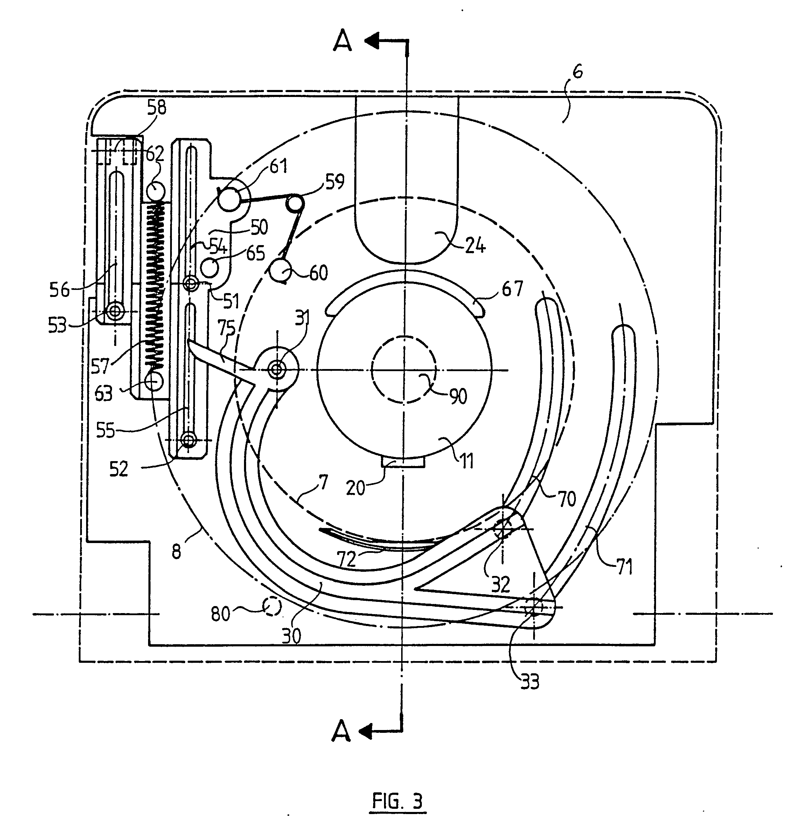

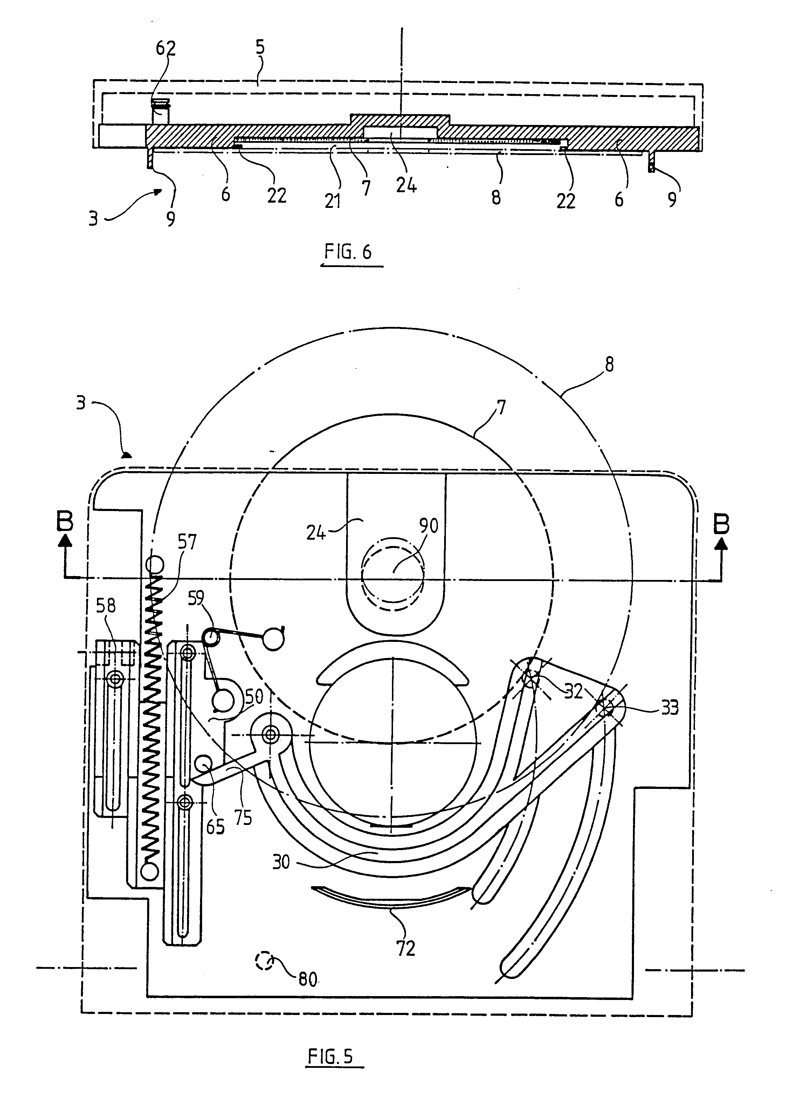

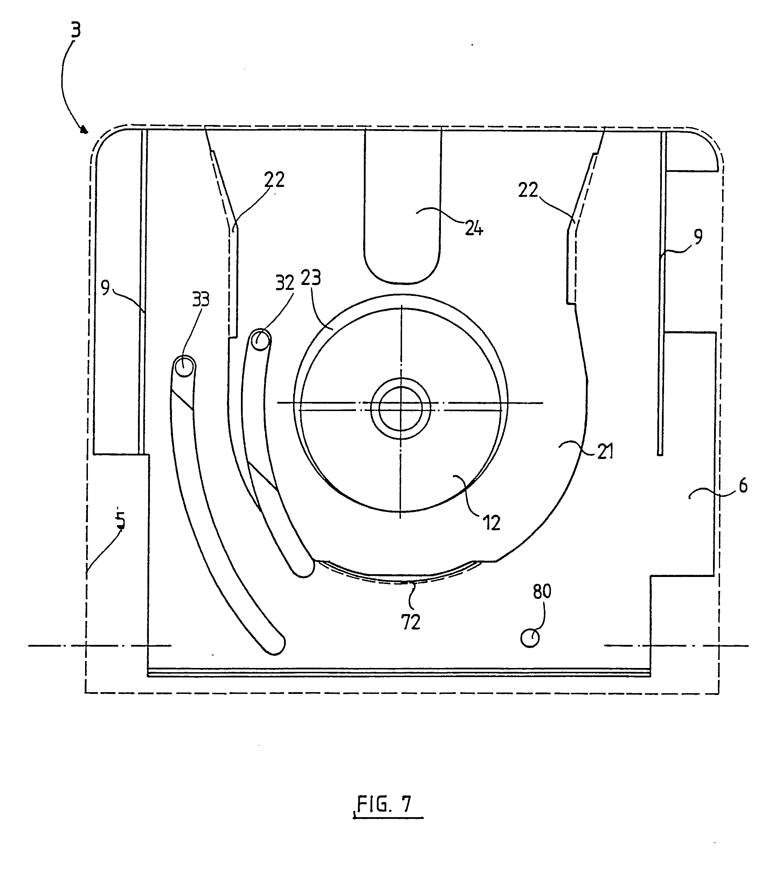

A la figure 2, la porte 3 est représentée en position d'ouverture intermédiaire. On remarque la butée 20 sur laquelle le bord inférieur de la coupelle 11 vient s'appuyer, ce qui force l'ensemble des moyens de clamage à basculer et prendre une inclinaison opposée à celle de la surface 6 pour amener le bord inférieur du disque 7 qui glisse sur le cône du plateau d'entraînement 2 à venir s'appuyer sur l'épaulement 72 adjacent à l'évidement 21 en forme de U creusé dans la surface 6. Cet évidement 21 correspond aux dimensions d'un disque 7 de petit diamètre (voir figure 7) et ses parois latérales sont constituées par la surface 6 même, assurant ainsi le guidage du disque 7 lorsqu'il passe de sa position opérative à sa position d'insertion et d'éjection et vice versa. Avantageusement, on prévoit de chaque côté un léger débordement 22 de la surface 6 de façon à limiter le mouvement du disque par rapport à ladite surface 6 lors du pivotement de la porte 3 (voir figures 6 et 7). Un logement rond 23 est pratiqué dans l'évidement 21 afin d'escamoter le plateau de clamage 12 lors du retour des moyens de clamage dans le plan de la surface 6 (figure 3).

Comme représenté aux figures 3, 5 et 7 une encoche 24 pratiquée dans la partie supérieure de l'évidement 21 permet à l'utilisateur d'introduire un doigt dans le trou central 90 du disque et d'extraire plus aisément celui-ci (figure 5).

A la figure 3 on a également représenté un levier 30 pivotant autour d'un axe 31 et s'appuyant sur la surface 6 du côté opposé à celui où est pratiqué l'évidement 21. Une extrémité de ce levier supporte deux tétons 32, 33 passant au travers d'ouvertures 70, 71 pratiquées dans la surface 6 pour coopérer avec la périphérie de disques de chaque diamètre existant (téton 32 pour un disque de petit diamètre 7 ; téton 33 pour un disque de grand diamètre 8).

Un tirant 40 visible sur la fig. 4, fixé au châssis par un axe 41, commande la translation d'une coulisse 50, visible sur les figures 3 et 5, par l'intermédiaire d'un axe de liaison 58. Cette coulisse 50 est retenue et guidée par trois tétons 51, 52 et 53 fixés sur la surface 6 et passant au travers de fentes 54, 55 et 56 pratiquées dans ladite coulisse 50. Cette coulisse 50 est soumise à l'action d'un ressort 57 faisant aussi office d'amortisseur lors du pivotement de la porte 3 à l'ouverture.

Ledit ressort 57 est ancré à la surface 6 à l'aide du téton 62 et à la coulisse 50 par le téton 63 et a tendance à ramener celle-ci en position haute (fig. 3).

Un ressort plat en épingle 59 fixé d'une part à la surface 6 à l'aide du téton 60 et d'autre part à la coulisse 50 par un téton 61, génère, lors de la translation de la coulisse 50 (passage de la position représentée à la figure 3 à celle représentée à la figure 5) une force qui tout d'abord s'oppose à celle créée par le tirant 40 et donc freine ladite translation et par conséquent le pivotement de la porte 3 puis qui s'additionne à celle du tirant 40 pour renforcer ladite translation et assurer simultanément le pivotement de la porte 3 et le relèvement du disque 7 ou 8. Un téton 65 placé sur la coulisse 50 sert à commander le pivotement du levier 30 en agissant sur une saillie 75.

Une dépression 67 pratiquée au-dessus de l'ouverture circulaire 68 dans la surface 6 du côté où se trouve la butée 20 permet d'obtenir un pivotement plus important de la coupelle 11 et donc du disque 7 dans le sens opposé à celui de la surface 6.

La figure 4 représente la porte 3 dans sa position d'ouverture, le mouvement étant limité par le débattement du tirant 40 et de la coulisse 50. La coulisse 50, le levier 30 et le disque 7 ou 8 se trouvent alors dans la position représentée à la figure 5, les moyens de clamage ayant entre-temps basculés sous l'action de leur propre poids et étant revenus dans le plan de surface 6.

Le fonctionnement du dispositif s'effectue pour un disque 7 de petit diamètre comme suit :

La porte étant ouverte (figures 4, 5 et 7), l'utilisateur dépose le disque 7 dans la partie supérieure de l'évidement 21, le bord du disque 7 s'appuyant sur le téton 32.

La porte 3 peut être alors pivotée pour amener le disque 7 en position opérative (figure 1). Au cours de ce mouvement, le ressort 57 ramène la coulisse 50 dans la position représentée à la figure 3 et de ce fait, le levier 30, sous l'effet du poids du disque 7, pivote horlogiquement et fait en sorte que le disque 7 repose sur l'épaulement 72. Au cours de ce mouvement, les débordements 22 de la surface 6 limitent l'écartement du disque 7 par rapport au plan de la surface 6. Le disque est ensuite centré et plaqué sur son plateau d'entraînement 2 ; le dispositif se trouve dans la position représentée aux figures 1 et 3 et le moteur 100 peut alors être mis sous tension pour permettre la lecture des informations portées par le disque 7. Pour éjecter le disque 7, la porte 3 est pivotée dans le sens opposé. Au cours de ce mouvement et comme décrit précédemment, la butée 20 agit sur la coupelle 11 pour forcer les moyens de clamage 10, 11, 12 à prendre tout d'abord une inclinaison opposée à celle de la surface 6 et donc amener le disque 7 dans la position représentée à la figure 2. L'épaulement 72 limite alors le mouvement de descente du disque 7. Par la poursuite du mouvement d'ouverture de la porte 3, les moyens de clamage 10, 11, 12 et le disque 7 reviennent dans le plan de surface 6 sous l'action de leur propre poids. Simultanément, la coulisse 50, suite à l'action du tirant 40, a entamé son mouvement de translation qui est dans cette phase freiné par l'action du ressort en épingle 59. Le positionnement du téton 65 est tel qu'il n'agit sur la saillie 75 du levier 30 qu'après retour du disque 7 contre la surface 6. Par poursuite du mouvement d'ouverture de la porte 3 et donc du mouvement de translation de la coulisse 50, le téton 65 commande le pivotement du levier 30. A cet instant, le ressort en épingle 59 bascule autour de son point d'équilibre et la force qu'il génère vient renforcer le mouvement de translation de ladite coulisse 50. Le téton 32 en agissant sur la périphérie du disque 7 assure la remontée de celui-ci qui est guidé par le flanc de l'évidement 21 et les débordements 22. Le disque 7 est dans la position représentée aux figures 4 et 5 et peut alors être retiré par l'utilisateur. Le dispositif est prêt à assurer le chargement et le centrage d'un disque de n'importe quel diamètre.

Dans le cas d'un disque 8 de grand diamètre, le fonctionnement du dispositif s'effectue comme suit :

La porte étant ouverte (figures 4 et 5), l'utilisateur dépose le disque 8 sur la surface 6, la périphérie de celui-ci venant s'appuyer sur le téton 33 et le guide 9. Comme décrit précédemment, lors de la fermeture de la porte 3, le levier 30 pivote horlogiquement et amène le disque dans la position représentée à la figure 3, un téton fixe 80 limitant le mouvement vers le bas. Le disque 8 est alors centré puis clamé sur le plateau d'entraînement 2 (figures 1 et 3, disque en traits pointillés) et le moteur 100 peut être mis sous tension.

Pour éjecter le disque 8, la porte 3 est pivotée en sens inverse et le disque 8 après que son orifice central 90 ait glissé sur le cône du plateau d'entraînement 2 vient reposer sur les tétons 33 et 80.

Comme expliqué précédemment, la coulisse 50, au cours de son mouvement de translation, commande le pivotement du levier 30 par l'intermédiaire de la saillie 75 ce qui a pour effet de remonter le disque 8 par action du téton 33 sur sa périphérie qui s'appuie sur le guide 9. Le disque 8 est alors ramené dans la position représentée aux figures 4 et 5 et peut être retiré par l'utilisateur. Le dispositif est alors prêt à assurer le chargement et le centrage d'un disque de n'importe quel diamètre.

Comme on le remarque à la figure 4, le téton 32 est d'une longueur inférieure à celle du téton 33 de façon à ne pas venir en contact avec la surface d'un disque 8 de grand diamètre lors de sa rotation en phase de reproduction et/ou d'enregistrement.

Ainsi qu'on l'aura noté, tout le dispositif objet de l'invention se trouvant dans l'espace compris entre la surface 6 et le capot 5 de la porte 3, peut être adapté à n'importe quel type de lecteur de disques puisqu'il ne requiert aucun espace du côté du plateau d'entraînement 2 et des moyens de lecture non représentés pour la simplicité des figures.

D'autre part, on notera que l'espace nécessaire à la mise en oeuvre du dispositif objet de l'invention reste toujours inférieur à celui nécessaire au mouvement des moyens de clamage 10, 11 et 12 ce qui évite toute modification de la forme du capot 5 et donc du volume d'une porte 3 existante mais ne permettant que le chargement, le centrage et l'éjection d'un disque de grand diamètre.

**Revendications**

1. Dispositif de chargement, d'éjection et de centrage de disques (7, 8) d'au moins deux diamètres différents assurant le passage du disque de son niveau et de son plan d'introduction à son niveau et son plan opératif en substance vertical et vice versa comportant :
- une surface (6) pivotant autour d'un axe (4) et destinée à recevoir les disques (7, 8),
- d'au moins un guide (9) limitant le mouvement latéral du disque lorsqu'il passe de son niveau d'introduction à son niveau opératif et vice versa,
- des moyens (10, 11, 12) assurant le clamage d'un disque (7, 8) sur son plateau d'entraînement (2), libres en rotation par rapport à ladite surface (6) et dont le déplacement perpendiculaire à cette même surface est limité, caractérisé en ce que la surface (6) comporte des moyens de positionnement (72) d'un disque de petit diamètre (7) à un niveau proche de son niveau opératif lors du passage dudit disque de son plan de chargement vers son plan opératif et un élément (20) agissant sur les moyens de clamage (11) pour forcer le disque (7) à prendre momentanément une inclinaison opposée à celle de la surface (6) lorsqu'au début de son pivotement elle assure le passage du disque (7) de son plan opératif à son plan d'éjection, afin de positionner et maintenir la périphérie d'un disque de petit diamètre (7) en contact avec lesdits moyens de positionnement (72).

2. Dispositif selon la revendication 1, caractérisé en ce que l'élément (20) est constitué d'une butée (20) coopérant avec un des éléments - coupelle (11) - des moyens de clamage (10, 12).

3. Dispositif selon la revendication 1 ou 2, caractérisé en ce que les moyens de positionnement (72) sont constitués d'un épaulement (72).

4. Dispositif selon la revendication 2, caractérisé en ce que la butée (20) est dimensionnée de telle sorte qu'après un déplacement angulaire donné de la surface (6), les moyens de clamage (10, 11, 12) et le disque (7) qu'ils supportent reviennent dans le plan de ladite surface sous l'influence de leur propre poids.

5. Dispositif selon l'une quelconque des revendications précédents, caractérisé en ce que ladite surface (6) est munie d'un levier (30) monté en pivotement et dont une extrémité coopère avec la périphérie du disque (7) de façon à faire passer ce dernier de son niveau opératif à son niveau de chargement ou d'éjection et vice versa.

6. Dispositif selon la revendication 5, caractérisé en ce qu'il comprend des moyens de commande (50, 65, 40) agissant sur ledit levier (30) après que le disque (7) et les moyens de clamage (10, 11, 12) soient revenus dans le plan de la surface (6).

7. Dispositif selon la revendication 6, caractérisé en ce que lesdits moyens de commande (50, 65, 40) sont constitués d'une coulisse (50) positionnée sur le plan de surface et dont la translation est actionnée par un tirant (40) fixé au châssis (1) de l'appareil.

8. Dispositif selon la revendication 7, caractérisé en ce qu'il comporte des moyens (59) freinant la translation de la coulisse (50) lorsque les moyens de clamage (10, 11, 12) et le disque (7) possèdent une inclinaison opposée à celle de la surface (6).

9. Dispositif selon la revendication 7, caractérisé en qu'il comporte des moyens (59) renforçant la translation de la coulisse (50) après que les moyens de clamage (10, 11, 12) et le disque (7, 8) soient revenus dans le plan de la surface (6).

10. Dispositif selon les revendications 8 et 9 caractérisé en ce que les moyens (59) freinant et renforçant le mouvement de la coulisse (50) sont constitués d'un moyen élastique unique, tel un ressort en épingle (59).

FIG. 1

FIG. 2

FIG. 3

FIG. 4

FIG. 6

FIG. 5

FIG. 7